# EUROPÄISCHE PATENTSCHRIFT

(11) **EP 1 795 248 B1**
(45) Veröffentlichungstag und Bekanntmachung des Hinweises auf die Patenterteilung: **12.10.2016**
(21) Anmeldenummer: 06125535.2
(22) Anmeldetag: 06.12.2006
(51) Int. Cl.: B01D 39/16, A47L 9/14

(54) **STAUBSAUGERBEUTEL**
VACUUM CLEANER BAG
SAC D'ASPIRATEUR

(30) Priorität: 06.12.2005 DE 202005019004 U
(43) Veröffentlichungstag der Anmeldung: 13.06.2007
(73) Patentinhaber: Melitta Europa GmbH & Co. KG, 32427 Minden (DE)
(72) Erfinder: Czado, Wolfgang, 32429, Minden (DE)
(74) Vertreter: Dantz, Jan Henning

(56) Entgegenhaltungen:
- EP-A- 1 254 693
- EP-A- 1 721 555
- DE-A- 19 606 718
- DE-U- 20 209 923
- DE-U-202005 009 452
- US-A- 5 647 881

## Beschreibung

Die vorliegende Erfindung betrifft ein Filtermaterial, insbesondere für einen Staubsaugerbeutel mit mindestens einer Lage Vliesstoff sowie einen Staubsaugerbeutel.

Es gibt Filtermaterialien, die aus einer oder mehreren Lagen aus Vliesstoff gebildet sind und einen hohen Abscheidegrad aufweisen. Solche Filtermaterialien werden beispielsweise als Staubsaugerbeutel oder als Filtermaterial für Klimaanlagen, Fahrzeugfilter etc. eingesetzt. Der Einsatz von Vliesstoffmaterial besitzt allerdings den Nachteil, daß das flauschige Material einen hohen Abscheidegrad aufweist, allerdings nur eine geringe Festigkeit. Der Einsatz eines Spunbondvlieses zur Erhöhung der Festigkeit würde die Kosten des Filtermaterials stark erhöhen.

Aus der DE 202 09 923 ist ein Staubfilterbeutel bekannt, der aus einem geschichteten, luftdurchlässigen Material besteht, der an der Innenseite eine perforierte Folie aufweisen kann. Ferner ist ein eine Mittellage und eine Außenlage aus einem Vliesstoffmaterial vorgesehen. Die beschriebenen Materiallagen können allerdings nur begrenzt eine gestaffelte Abscheidung von verschiedenen Staubpartikeln erreichen.

Die EP 1 254 693 A2 offenbart einen Luftfilter mit einer elektrostatisch wirksamen Vliesstoffschicht. Der Luftfilter kann dabei einen trocken gelegten Stapelfaser-Vliesstoff mit einer Luftdurchlässigkeit größer oder gleich 1.000 1/(m² x s) umfassen.

Bisher ist aus dem Stand der Technik jedoch nicht bekannt, wie Informationen zum Inhalt des Staubsaugerbeutels erhalten werden können. Die zu lösende Aufgabe kann daher darin gesehen werden, einen Staubsaugerbeutel bereitzustellen, bei dem der Füllstand erfasst werden kann, ohne den Beutel zu öffnen und in seiner Betriebssicherheit einzuschränken.

Diese Aufgabe wird mit einem Staubsaugerbeutel mit einem Filtermaterial mit den Merkmalen des Anspruches 1 gelöst.

Das Filtermaterial umfasst mindestens eine Lage aus Vliesstoff und eine luftdurchlässige Kunststoffolie, die zumindest bereichsweise miteinander verbunden sind. Dadurch kann die luftdurchlässige Kunststoffolie eine Stützschicht ausbilden, um das eher flauschige Material aus Vliesstoff abzustützen, so daß einerseits eine Lage aus einem Material mit hoher Festigkeit und andererseits eine Lage mit besonders guten Filtereigenschaften vorhanden sind. Die Stützschicht aus der luftdurchlässigen Kunststoffolie ist dabei kostengünstig herstellbar, so daß die Gesamtkosten des Filtermaterials ebenfalls moderat sind. Das Filtermaterial weist dabei einen Vorfilter, einen Grobstaubspeicher, einen Feinfilter und die durchlässige Kunststofffolie auf. Dabei kann die Luftdurchlässigkeit des Vorfilters über 1.000 1/(m² x s) aufweisen, so dass eine gute Vorabscheidung erreicht wird und eine hohe Luftdurchlässigkeit gegeben bleibt.

Vorzugsweise ist die mindestens eine Lage aus Vliesstoff und luftdurchlässige Kunststoffolie über ein Verschweißen oder eine Laminierung miteinander verbunden. Das Verschweißen kann über Ultraschall und/oder Energiezufuhr im kontinuierlichen Verfahren erfolgen.

Die Kunststoffolie kann perforiert oder geschlitzt ausgebildet sein, um die notwendige Luftdurchlässigkeit zu erreichen. Vorzugsweise ist die Luftdurchlässigkeit der Kunststoffolie höher als die der Lage oder Lagen aus Vliesstoff, damit die feinere Filterung im Bereich der Lagen aus Vliesstoff stattfindet. In vorteilhafter Ausgestaltung der Erfindung sind dabei mehrere Lagen aus Vliesstoff mit unterschiedlicher Luftdurchlässigkeit vorgesehen.

Für eine gut gestaffelte Ausbildung des Filtermaterials kann die Luftdurchlässigkeit des Vorfilters über 1.000 l/(m² x s), der Grobstaubspeicher eine geringere Luftdurchlässigkeit und der Feinfilter beispielsweise eine Luftdurchlässigkeit von 200 bis 500 l/(m² x s) aufweisen. Durch kann ein hohes Maß an Staubabscheidung bei weitgehend konstanter Saugleistung erreicht werden.

Erfindungsgemäß wird auch ein Staubsaugerbeutel bereitgestellt, der ein wie oben beschriebenes Filtermaterial aufweist. Das Filtermaterial kann dabei randseitig zur Bildung eines Beutels miteinander verschweißt sein. Die luftdurchlässige Kunststoffolie kann bei einem Staubsaugerbeutel an der Innenseite als Prallschutz eingesetzt werden, um beim Einsaugen von spitzen oder abrasiven Teilchen die Gefahr einer Beschädigung des Staubsaugerbeutels zu minimieren. Alternativ oder zusätzlich kann eine Kunststoffolie auch an der Außenseite des Staubsaugerbeutels vorgesehen sein, um die Handhabung hygienischer zu gestalten.

Erfindungsgemäß ist an einer Stelle des Staubsaugerbeutels nur die Kunststoffolie zur Ausbildung eines Sichtfensters vorgesehen. Im Bereich des Sichtfensters ist die Kunststoffolie dabei luftundurchlässig ausgebildet, um Strömungsverluste zu vermeiden. Durch das Sichtfenster kann der Füllstand in dem Staubsaugerbeutel visuell erfaßt werden.

Gemäß einer weiteren Ausgestaltung der Erfindung kann ein Mittel zur Verminderung von Gerüchen in oder an dem Beutel enthalten sein.

Die Erfindung wird nachfolgend anhand mehrerer Ausführungsbeispiele beschrieben. In der einzigen Figur sind Untersuchungen zu unterschiedlichen Ausführungsbeispielen von Staubsaugerbeuteln aus unterschiedlichen Filtermaterialien gezeigt.

Es wurden unterschiedliche Filtermaterialien zur Bildung von Staubsaugerbeuteln verwendet, wobei das Filtermaterial wenigstens eine Lage einer perforierten Kunststoffolie aufweist. Die Staubsaugerbeutel weisen zu Beginn etwa dieselbe Saugleistung auf wie ein Staubsaugerbeutel aus herkömmlichen Filtermaterialien. Der Abfall der Saugleistung ist dabei stark vom Aufbau des Filtermaterials abhängig.

Nachfolgend werden verschiedene Beispiels für einen Aufbau des Filtermaterials aufgeführt, wobei die Reihenfolge der einzelnen Schichten Lagenaufbau von innen nach außen wiedergeben soll:

### Beispiel 1:

### Perforierte Folie / Grobfiltervlies / Meltblow / Spunbond

Vorteile: Stabiler Beutel mit Prallschutzfunktion und erhöhter Staubspeicherfähigkeit

### Beispiel 2:

### Grobfiltervlies / Perforierte Folie / Meltblow / Spunbond

Vorteile: Stabiler Beutel mit teilweiser Prallschutzfunktion und weiter erhöhter Staubspeicherfähigkeit

### Beispiel 3:

### Spunbond / Grobfiltervlies / Meltblow / Perforierte Folie

Vorteile: Stabilerer Beutel mit erhöhter Staubspeicherfähigkeit

### Beispiel 4:

### Spunbond / Grobfltervlies / Spunbond / Meltblow / Perforierte Folie

Vorteile: Stabilerer Beutel mit erhöhter Staubspeicherfähigkeit und verbesserter Filtereffizienz

### Beispiel 5:

### Spunbond / Grobfiltervlies / Spunbond / Meltblow / Spunbond / Perforierte Folie

Vorteile: Stabilerer Beutel mit erhöhter Staubspeicherfähigkeit und weiter verbesserter Filtereffizienz.

Das Filtermaterial kann eine Kombination verschiedener Lagen sein, beispielsweise kann ein Vorfilter, ein Grobstaubspeicher, ein Feinfilter und die durchlässige Kunststoffolie vorhanden sein, die eine stabilisierende Lage ausbildet.

Hierbei hält der Vorfilter groben Schmutz > 1 mm zurück, weist eine Luftdurchlässigkeit von > 1000 l/(m² x s), eine Dicke < 0,5 mm und einem Flächengewicht zwischen 15 - 100 g/m² auf. Der Vorfilter besteht vorzugsweise aus einem Spinnvlies, einem Gittergelege oder einer perforierten oder geschlitzten Folie.

Der Grobstaubspeicher speichert groben Schmutz < 1 mm, weist eine Luftdurchlässigkeit von > 500 l/(m² x s), vorzugsweise > 1000 l/(m² x s), einer Dicke von 0,5 bis 5 mm, vorzugsweise 1 bis 2 mm und einem Flächengewicht zwischen 20 - 100 g/m² auf.

Der Grobstaubspeicher besteht vorzugsweise aus einem trocken oder naßgelegten Vlies, das durch Vemadeln oder Wasserstrahlen, durch Klebepulver oder Bicomponentenfasern oder andere übliche Verfestigungsverfahren verfestigt sein kann. Weiterhin kann der Grobstaubspeicher einen Fasergradienten sowohl bezüglich des Faserdurchmessers (zunehmender Faserdurchmesser zur Anströmseite hin) als auch der Faserdichte (zunehmende Faserdichte zur Abströmseite hin) aufweisen. Der Gradient kann dabei auch durch mehrere aufeinanderfolgenden Vlieslagen mit ebengenannten Eigenschaften ausgebildet werden. Ebenso geeignet ist ein offenporiger Schaum.

Der Feinfilter hält feinen Schmutz > 0,0001 mm zurück und weist eine Luftdurchlässigkeit von > 200 l/(m x s), einer Dicke < 0,5 mm und einem Flächengewicht zwischen 15 - 80 g/m² auf. Der Feinfilter besteht vorzugsweise aus einem Spinnvlies, einem Meltblow oder einer Spinnvlies-Meltblow-Kombination wie SM, SMS, SMMS, SMSMS etc.

Die stabilisierende Lage weist eine Luftdurchlässigkeit von > 500 l/(m² x s), einer Dicke < 1 mm und einem Flächengewicht zwischen 15 - 100 g/m² auf und besteht vorzugsweise aus einem Spinnvlies, einem Gittergelege oder einer perforierten oder geschlitzten Folie.

Alternativ ist es möglich, bei reißfester Ausführung des Grobstaubspeichers auf die Vorfilterschicht zu verzichten.

Weiterhin vorteilhaft ist es, neben der Feinfilterschicht eine zusätzliche Feinstfilterschicht in Form einer Lage aus Nanofasern mit einem Faserdurchmesser von 10 - 2000 nm einzubringen, wobei diese Lage elektrostatisch aufladbar ausgebildet sein kann. Die Nanofaserschicht hält einen Schmutz zurück und weist eine Luftdurchlässigkeit von > 500 l/(m² x s), eine Dicke < 0,1 mm und ein Flächengewicht zwischen 0,01 - 2 g/m² auf.

Vorzugsweise ist die Nanofaserschicht direkt auf der Feinfilterschicht, z.B. einem Meltblow abgelegt. Hierbei ist sowohl eine Schicht Nanofasern auf der Abströmseite denkbar, als auch eine Schicht auf der Anströmseite sowie zur Erhöhung der Filterleistung sowohl auf der An- wie Abströmseite.

Ferner kann an dem Staubsaugerbeutel ein Mittel zur Verminderung von Gerüchen vorgesehen sein, dass beispielsweise ein Absorbens ist, wie z.B. Aktivkohle, imprägnierte Aktivkohle, Zeolith, synthetischer polymerer Absorber, Metalloxid, Kieselgel und/oder Silicagel. Das Mittel zur Verminderung von Gerüchen kann lose im Beutel enthalten sein, in einem luftdurchlässigen Behältnis lose oder an einer Stelle fixiert im Beutel sein, an ein Trägergewebe wie Schaumstoff oder Vlies gebunden sein, welches lose oder an einer Stelle fixiert im oder außen am Beutel ist, und/oder an eine der Filterschichten des Beutelmaterials gebunden oder lose in oder auf diese eingebracht sein.

### Versuche:

Die Maß der Beutel der Beispiele A - E betragen 26 x 28 cm.
Gemessen wurde der Abfall des Luftvolumenstroms bei Beladung des Beutels mit DMT-Typ8-Staub. Die eingesetzte Folie ist eine perforierte Plastikfolie (Maag OPP-Coex) mit einer Luftdurchlässigkeit von 1200 l/(m² x s) und einer Stärke von 20 µm.

Beutel A1 + A2 besteht aus einem 3-lagigen Filtermedium aus einer perforierten Plastikfolie, 25 g/m² Meltblow und 30 g/m² Spunbond.

Beutel B besteht aus einem 6-lagigen Luftfiltermedium aus einer perforierten Plastikfolie, 20 g/m² Spunbond, 45 g/m² Vlies, 20 g/m² Meltblow und 30 g/m² Spunbond.

Beutel C besteht aus einem 6-lagigen Luftfiltermedium aus 20 g/m² Spunbond, 45 g/m² Vlies, 20 g/qm Spunbond, 25 g/m² Meltblow, 30 g/m² Spunbond und einer perforierten Plastikfolie.

Beutel D besteht aus einem 5-lagigen Luftfiltermedium aus 20 g/m² Spunbond, 45 g/m² Vlies, 20 g/m² Spunbond, 25 g/m² Meltblow und einer perforierten Plastikfolie.

Beutel E ist ein Standard Vlies-Beutel.

Wie aus der Grafik hervorgeht, bleibt die Luftdurchlässigkeit auch bei relativ hoher Staubeinwaage bei den Mustern konstant. Gerade die Beutel C und D sind in den Filtereigenschaften etwa gleich mit einem normalen Standardvliesbeutel. Die Beutel A1, B und A2 weisen einen größeren Abfall auf, wenn der Füllgrad ansteigt.

In den obigen Ausführungsbeispielen wird das Filtermaterial für einen Staubsaugerbeutel eingesetzt. Es ist natürlich auch möglich, das Filtermaterial für eine Taschenfilter für eine Klimaanlage, eine Fahrzeugfilter oder andere Filter einzusetzen.

Zudem ist an dem Staubsaugerbeutel ein Sichtfenster aus transparenter Kunststoffolie vorgesehen, damit von außen der Füllgrad des Staubsaugerbeutels visuell erkennbar ist. Füllgrad und Inhalt des Staubsaugerbeutels ist für den Benutzer eine wichtige Information, die bisher nur sehr ungenau erfaßbar ist. Im Bereich des Sichtfensters ist die Folie dabei geschlossen ausgebildet, um Strömungsverluste zu vermeiden.

Das erfindungsgemäße Filtermaterial kann zudem auch in anderen Filtern eingesetzt werden, beispielsweise in Taschenfiltern, KFZ-Innenraumfiltern, Innenraumfilter, V-Zellen, Z-Line-Filter, Filterzellen, Filtermatten etc..

## Patentansprüche

1. Staubsaugerbeutel mit einem Filtermaterial mit mindestens einer Lage Vliesstoff und einer luftdurchlässigen Kunststofffolie, die zumindest bereichsweise miteinander verbunden sind, wobei das Filtermaterial ein Vorfiltervlies, einen Grobstaubspeicher, einen Feinfilter und eine luftdurchlässige Kunststofffolie aufweist, **dadurch gekennzeichnet, daß** an einer Stelle nur die Kunststofffolie zur Bildung eines Sichtfensters den Staubsaugerbeutel begrenzt und im Bereich des Sichtfensters die Kunststofffolie luftundurchlässig ausgebildet ist.

2. Staubsaugerbeutel nach Anspruch 1, **dadurch gekennzeichnet, daß** die mindestens eine Lage Vliesstoff und die luftdurchlässige Kunststofffolie miteinander verschweißt oder durch Laminierung miteinander verbunden sind.

3. Staubsaugerbeutel nach Anspruch 1 oder 2, **dadurch gekennzeichnet, daß** die Kunststofffolie perforiert oder geschlitzt ausgebildet ist.

4. Staubsaugerbeutel nach einem der Ansprüche 1 bis 3, **dadurch gekennzeichnet, daß** mehrere Lagen aus Vliesstoff mit unterschiedlicher Luftdurchlässigkeit vorgesehen sind.

5. Staubsaugerbeutel nach einem der Ansprüche 1 bis 4, **dadurch gekennzeichnet, daß** es aus einem Spunbond, einem Grobfiltervlies, einem Spunbond, einem Meltblow und einer perforierten Folie gebildet ist.

6. Staubsaugerbeutel nach einem der Ansprüche 1 bis 4, **dadurch gekennzeichnet, daß** es aus einem Spunbond, einem Grobfiltervlies, einem Spunbond, einem Meltblow, einem Spunbond und einer perforierten Folie gebildet ist.

7. Staubsaugerbeutel nach einem der Ansprüche 1 bis 6, **dadurch gekennzeichnet, daß** zumindest auf einer Lage des Filtermaterials auf zumindest einer Seite Nanofasern aufgebracht sind.

8. Staubsaugerbeutel nach Anspruch 7, **dadurch gekennzeichnet, daß** die Nanofasern einen mittleren Faserdurchmesser von 10 - 2000 nm aufweisen und elektrostatisch aufladbar sind.

9. Staubsaugerbeutel nach Anspruch 7 oder 8, **dadurch gekennzeichnet, daß** die Nanofasern vorzugsweise auf einer Meltblow Lage oder einer Spunbond Lage abgelegt sind.

10. Staubsaugerbeutel nach einem der vorhergehenden Ansprüche, **dadurch gekennzeichnet, daß** das Filtermaterial randseitig zur Bildung eines Beutels miteinander verschweißt ist.

11. Staubsaugerbeutel nach einem der vorhergehenden Ansprüche, **dadurch gekennzeichnet, daß** ein Mittel zur Verminderung von Gerüchen in oder an dem Beutel enthalten ist.

12. Staubsaugerbeutel nach Anspruch 11, **dadurch gekennzeichnet, daß** das Mittel zur Verminderung von Gerüchen ein Absorbens ist, wie Aktivkohle, imprägnierte Aktivkohle, Zeolith, synthetischer polymerer Absorber, Metalloxid, Kieselgel und/oder Silicagel.

13. Staubsaugerbeutel nach Anspruch 11 oder 12, **dadurch gekennzeichnet, daß** das Mittel zur Verminderung von Gerüchen lose im Beutel enthalten ist, in einem luftdurchlässigen Behältnis lose oder an einer Stelle fixiert im Beutel ist, an ein Trägergewebe wie Schaumstoff oder Vlies gebunden ist, welches lose oder an einer Stelle fixiert im oder außen am Beutel ist, und/oder an eine der Filterschichten des Beutelmaterials gebunden oder lose in oder auf diese eingebracht ist.

## Claims

1. Vacuum cleaner bag with a filter material with at least one layer of non-woven material and an air-permeable plastics material film, which are connected together at least regionally, wherein the filter material comprises a pre-filter non-woven material, a coarse dust store, a fine filter and an air-permeable plastics material film, **characterised in that**, for formation of a viewing window, at one location just the plastics material film bounds the vacuum cleaner bag and the plastics material film is constructed to be impermeable to air in the region of the viewing window.

2. Vacuum cleaner bag according to claim 1, **characterised in that** the at least one layer of non-woven material and the air-permeable plastics material film are welded together or connected together by laminating.

3. Vacuum cleaner bag according to claim 1 or 2, **characterised in that** the plastics material film is constructed to be perforated or slit.

4. Vacuum cleaner bag according to any one of claims 1 to 3, **characterised in that** several layers of non-woven material with different air permeability are provided.

5. Vacuum cleaner bag according to any one of claims 1 to 4, **characterised in that** it is formed from a spunbond, a coarse filter non-woven material, a spunbond, a meltblow and a perforated film.

6. Vacuum cleaner bag according to any one of claims 1 to 4, **characterised in that** it is formed from a spunbond, a coarse filter non-woven material, a spunbond, a meltblow, a spunbond and a perforated film.

7. Vacuum cleaner bag according to any one of claims 1 to 6, **characterised in that** nano-fibres are coated at least on a layer of the filter material on at least one side.

8. Vacuum cleaner bag according to claim 7, **characterised in that** the nano-fibres have a mean fibre diameter of 10 to 2,000 nanometres and are electrostatically chargeable.

9. Vacuum cleaner bag according to claim 7 or 8, **characterised in that** the nano-fibres are preferably deposited on a meltblow layer or a spunbond layer.

10. Vacuum cleaner bag according to any one of the preceding claims, **characterised in that** the filter material is welded together at the edge in order to form a bag.

11. Vacuum cleaner bag according to any one of the preceding claims, **characterised in that** a means for reducing odours is included in or at the bag.

12. Vacuum cleaner bag according to claim 11, **characterised in that** the means for reducing odours is an absorbent, such as activated carbon, impregnated activated carbon, zeolite, synthetic polymer absorber, metal oxide, siliceous gel and/or silica gel.

13. Vacuum cleaner bag according to claim 11 or 12, **characterised in that** the means for reducing odours is present loose in the bag, is loose in an air-permeable container or fixed at a location in the bag, is bound to a carrier fabric such as foamed material or non-woven material, which is loose or fixed at a location in or externally at the bag, and/or is bound to one of the filter layers of the bag material or is loosely incorporated in or on this.

## Revendications

1. Sac d'aspirateur comportant une matière filtrante ayant au moins une couche de non-tissé et un film de matière plastique perméable, qui sont au moins reliés l'un à l'autre par zone,
- la matière filtrante ayant une couche de non-tissé de préfiltre, un accumulateur grossier de poussière, un filtre fin et un film en matière plastique perméable à l'air,
sac **caractérisé en ce qu'**
à un endroit il y a seulement le film de matière plastique pour délimiter une fenêtre pour le sac d'aspirateur et dans la zone de la fenêtre, le film de matière plastique est imperméable à l'air.

2. sac d'aspirateur selon la revendication 1,
**caractérisé en ce que**
la couche de non-tissé et le film en matière plastique perméable à l'air sont soudés l'un à l'autre ou sont reliés par laminage.

3. sac d'aspirateur selon les revendications 1 ou 2,
**caractérisé en ce que**
le film en matière plastique est muni de perforations ou de fentes.

4. sac d'aspirateur selon l'une des revendications 1 à 3,
**caractérisé par**
plusieurs couches de non-tissé ayant une perméabilité à l'air différente.

5. sac d'aspirateur selon l'une des revendications 1 à 4,
**caractérisé en ce qu'**
il est formé d'un non-tissé de microfibres filées-consolidées (spunbond), d'un non-tissé de filtre grossier, d'un non-tissé de microfibres filées-consolidées (spundbond), d'un non-tissé de microfibres soufflées à l'état fondu (meltblow) et d'un film perforé.

6. sac d'aspirateur selon l'une des revendications 1 à 4,
**caractérisé en ce qu'**
il est formé d'un non-tissé de microfibres filées-consolidées (spunbond), d'un non-tissé de filtre grossier, d'un non-tissé de microfibres filées-consolidées (spundbond), d'un non-tissé de microfibres soufflées à l'état fondu (meltblow), d'un non-tissé de microfibres filées-consolidées (spundbond) et d'un film perforé.

7. sac d'aspirateur selon l'une des revendications 1 à 6,
**caractérisé en ce que**
des nano-fibres sont prévues sur au moins un côté d'au moins une couche de la matière filtrante.

8. sac d'aspirateur selon la revendication 7,
**caractérisé en ce que**
les nano-fibres ont un diamètre moyen de fibre compris entre 10 et 2000 nm et ces nano-fibres peuvent être chargées électro-statiquement.

9. sac d'aspirateur selon la revendication 7 ou 8,
**caractérisé en ce que**
les nano-fibres sont déposées de préférence sur une couche non-tissé de microfibres filée-consolidées (spundbond) ou d'un non-tissé de microfibres soufflées à l'état fondu (meltblow).

10. sac d'aspirateur selon l'une des revendications précédentes,
**caractérisé en ce que**
la matière filtrante est soudée sur le côté du bord pour former un sac.

11. sac d'aspirateur selon l'une des revendications précédentes,
**caractérisé par**
un moyen pour réduire les odeurs dans ou sur le sac.

12. sac d'aspirateur selon la revendication 11,
**caractérisé en ce que**
le moyen pour réduire les odeurs est un absorbant tel que du charbon actif, une imprégnation de charbon actif, des zéolithes, un absorbeur polymère de synthèse, un oxyde métallique, un gel de silice et/ou silicagel.

13. sac d'aspirateur selon la revendication 11 ou 12,
**caractérisé en ce que**
les moyens pour réduire les odeurs sont placés librement dans le sac et dans un conteneur perméable à l'air, libre, ou fixé à un endroit du sac, à un support tel qu'une mousse ou un non-tissé, qui est libre ou fixé à un point ou est à l'extérieur du sac et/ou est relié à l'une des couches de filtre de la matière du sac ou est intégré librement dans ou sur celui-ci
